# EUROPEAN PATENT APPLICATION

(11) **EP 4 210 374 A1**
(43) Date of publication of application: **12.07.2023**
(21) Application number: 20952383.6
(22) Date of filing: 01.09.2020
(51) Int. Cl.: H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2020/033131
(87) International publication number: WO 2022/049643

(57) **Abstract**

A terminal according to an aspect of the present disclosure includes a receiving section that receives a radio resource control (RRC) parameter for a TCI state available as both a transmission configuration indication state (TCI state) for downlink (DL) and a TCI state for uplink (UL), and a control section that determines that the RRC parameter is available for at least one of the TCI state for the DL and the TCI state for the UL based on which set of the TCI states the RRC parameter is associated with. According to one aspect of the present disclosure, a TCI state can be appropriately controlled.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low delay, and the like (Non Patent Literature 1). In addition, for the purpose of further increasing capacity and advancement of LTE (third generation partnership project (3GPP) release (Rel.) 8 and 9), the specifications of LTE-Advanced (3GPP Rel. 10 to 14) have been drafted.

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In NR, use of a UL transmission configuration indication state (TCI state) has been studied as a beam (precoder) indication method for uplink (UL).

However, the way of controlling the TCI state including the existing TCI state (TCI state for downlink (DL)) when the UL TCI state is introduced has not yet been studied. If this control is not clarified, an increase in communication throughput may be suppressed.

Therefore, an object of the present disclosure is to provide a terminal, a radio communication method, and a base station capable of appropriately controlling a TCI state.

### Solution to Problem

A terminal according to an aspect of the present disclosure includes a receiving section that receives a radio resource control (RRC) parameter for a TCI state available as both a transmission configuration indication state (TCI state) for downlink (DL) and a TCI state for uplink (UL), and a control section that determines that the RRC parameter is available for at least one of the TCI state for the DL and the TCI state for the UL based on which set of the TCI states the RRC parameter is associated with.

### Advantageous Effects of Invention

According to one aspect of the present disclosure, a TCI state can be appropriately controlled.

### Brief Description of Drawings

[FIG. 1] Fig. 1 is a diagram illustrating an example of an RRC configuration of a TCI state in an embodiment 1.1.
[FIG. 2] Fig. 2 is a diagram illustrating an example of an RRC configuration of a TCI state in an embodiment 1.2.
[FIG. 3] Fig. 3 is a diagram illustrating another example of the RRC configuration of the TCI state in the embodiment 1.2.
[FIG. 4] Fig. 4 is a diagram illustrating an example of an RRC configuration of a TCI state in an embodiment 1.3.
[FIG. 5] Fig. 5 is a diagram illustrating an example of an RRC configuration of a TCI state in an embodiment 1.4.
[FIG. 6] Fig. 6 is a diagram illustrating another example of the RRC configuration of the TCI state in the embodiment 1.4.
[FIG. 7] Fig. 7 is a diagram illustrating still another example of the RRC configuration of the TCI state in the embodiment 1.4.
[FIG. 8] Fig. 8 is a diagram illustrating an example of an RRC configuration of a set of TCI states in an embodiment 2.1.
[FIG. 9] Fig. 9 is a diagram illustrating an example of an RRC configuration of a set of TCI states in an embodiment 2.2.
[FIG. 10] Fig. 10 is a diagram illustrating an example of an RRC configuration of a set of TCI states in an embodiment 2.3.
[FIG. 11] Figs. 11A and 11B are diagrams illustrating an example of TCI state activation/deactivation MAC CE according to a third embodiment.
[FIG. 12] Fig. 12 is a diagram illustrating an example of a schematic configuration of a radio communication system according to one embodiment.
[FIG. 13] Fig. 13 is a diagram illustrating an example of a configuration of a base station according to one embodiment.
[FIG. 14] Fig. 14 is a diagram illustrating an example of a configuration of a user terminal according to one embodiment.
[FIG. 15] Fig. 15 is a diagram illustrating an example of a hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) of at least one of a signal and a channel (expressed as a signal/channel. Similarly, in the present disclosure, "A/B" may be replaced with "at least A and B") in UE based on a transmission configuration indication state (TCI state).

The TCI state may represent what is applied to a downlink signal/channel. Those corresponding to the TCI state applied to an uplink signal/channel may be expressed as a spatial relation.

The TCI state is information on quasi-co-location (QCL) of a signal/channel, and may also be referred to as, for example, a spatial Rx parameter, spatial relation information (SRI), or the like. The TCI state may be configured in the UE for each channel or each signal.

The QCL is an indicator indicating a statistical property of a signal/channel. For example, when one signal/channel and another signal/channel have a QCL relation, this may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

It is noted that the spatial Rx parameter may correspond to a reception beam of the UE (for example, a reception analog beam), and the beam may be specified based on spatial QCL. The QCL (or at least one element of the QCL) in the present disclosure may be replaced with spatial QCL (sQCL).

A plurality of types of QCL (QCL types) may be defined. For example, four QCL types A to D may be provided that differ in parameters (or parameter sets) that can be assumed to be identical, and the parameters (which may also be referred to as QCL parameters) are shown below:
· QCL type A: doppler shift, Doppler spread, average delay, and delay spread,
· QCL type B: doppler shift and Doppler spread,
· QCL type C: doppler shift and average delay,
· QCL type D: spatial reception parameter.

The types A to C may correspond to QCL information associated with synchronization processing of at least one of time and frequency, and the type D may correspond to QCL information associated with beam control.

It may be referred to as a QCL assumption for the UE to assume that a given control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel based on a TCI state of the signal/channel or the QCL assumption.

The TCI state may be, for example, information on QCL of a target channel (or a reference signal (RS) for the channel) and another signal (for example, another downlink reference signal (DL-RS). The TCI state may be configured (indicated) by higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

It is noted that, a channel/signal to which the TCI state is applied may be referred to as a target channel/reference signal (RS), simply a target, or the like, and the other signal may be referred to as a reference RS, a source RS, simply a reference, or the like.

A channel for which the TCI state is configured (designated) may be, for example, a physical downlink shared channel (PDSCH), a physical downlink control channel (PDCCH), or the like.

Further, RS (DL-RS) having a QCL relation with the channel may be, for example, at least one of a synchronization signal block (SSB) and a channel state information reference signal (CSI-RS). Alternatively, the DL-RS may be a CSI-RS (also referred to as a tracking reference signal (TRS)) used for tracking or a reference signal (also referred to as a QRS) used for QCL detection.

The SSB is a signal block including at least one of a primary synchronization signal (PSS), a secondary synchronization signal (SSS), and a physical broadcast channel (PBCH). The SSB may be referred to as an SS/PBCH block.

An information element for a TCI state configured by higher layer signaling ("TCI state IE" of RRC) may include one or more pieces of QCL information ("QCL-Info"). The QCL information may include at least one of information about DL-RS having a QCL relation (DL-RS-related information) and information indicating a QCL type (QCL type information). The DL-RS-related information may include information such as an index of the DL-RS (for example, an SSB index or a non-zero-power (NZP) CSI-RS resource identifier (ID)), an index of a cell where the RS is located, or an index of a bandwidth part (BWP) where the RS is located.

### (Spatial relation for SRS and PUSCH)

In Rel.15 NR, the UE may receive information (SRS configuration information, for example, a parameter in the RRC control element "SRS-Config") used for transmission of a measurement reference signal (for example, a sounding reference signal (SRS)).

Specifically, the UE may receive at least one of information related to one or a plurality of SRS resource sets (SRS resource set information, for example, "SRS-ResourceSet" of the RRC control element) and information related to one or a plurality of SRS resources (SRS resource information, for example, "SRS-Resource" of the RRC control element).

One SRS resource set may be associated with a given number of SRS resources (given number of SRS resources may be grouped). Each SRS resource may be specified by an SRS resource identifier (SRS Resource Indicator (SRI)) or an SRS resource ID (Identifier).

The SRS resource set information may include an SRS resource set ID (SRS-ResourceSetId), a list of SRS resources ID (SRS-ResourceId) used in the resource set, an SRS resource type, and information of usage of the SRS.

Here, the SRS resource type may indicate any one of a periodic SRS (P-SRS), a semi-persistent SRS (SP-SRS), and an aperiodic CSI (aperiodic SRS (A-SRS)). The UE may periodically (or periodically after activation) transmit the P-SRS and the SP-SRS, and transmit the A-SRS based on the SRS request of the DCI.

Further, the usage (the RRC parameter "usage" or the Layer-1 (L1) parameter "SRS-SetUse") may be, for example, beam management, codebook (CB), noncodebook (NCB), antenna switching, or the like. The SRS used for codebook or non-codebook may be used to determine a precoder for codebook-based or non-codebook-based physical uplink shared channel (PUSCH) transmission based on the SRI.

For example, in the case of codebook-based transmission, the UE may determine a precoder for PUSCH transmission based on the SRI, a transmitted rank indicator (TRI), and a transmitted precoding matrix indicator (TPMI). In the case of non-codebook-based transmission, the UE may determine the precoder for the PUSCH transmission based on the SRI.

The SRS resource information may include an SRS resource ID (SRS-ResourceId), the number of SRS ports, an SRS port number, a transmission Comb, an SRS resource mapping (for example, time and/or frequency resource location, resource offset, cycle of resource, number of repetitions, number of SRS symbols, SRS bandwidth, and the like), hopping-related information, an SRS resource type, a sequence ID, spatial relation information of an SRS, and the like.

The spatial relation information (for example, "spatialRelationInfo" of the RRC information element) of the SRS may indicate spatial relation information between a given reference signal and the SRS. The given reference signal may be at least one of a Synchronization Signal/Physical Broadcast Channel (SS/PBCH) block, a Channel State Information Reference Signal (CSI-RS), and SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the given reference signal.

It is noted that, in the present disclosure, an SSB index, an SSB resource ID, and an SSB resource indicator (SSBRI) may be replaced with each other. Furthermore, a CSI-RS index, a CSI-RS resource ID, and a CSI-RS resource indicator (CRI) may be replaced with each other. Further, an SRS index, an SRS resource ID, and an SRI may be replaced with each other.

The spatial relation information of the SRS may include a serving cell index, a BWP index (BWP ID), and the like corresponding to the given reference signal.

When spatial relation information regarding the SSB or CSI-RS and the SRS is configured for a certain SRS resource, the UE may transmit the SRS resource by using the same spatial domain filter (spatial domain transmission filter) as a spatial domain filter (spatial domain reception filter) for receiving the SSB or CSI-RS. In this case, the UE may assume that the UE reception beam of the SSB or CSI-RS and the UE transmission beam of the SRS are the same.

For a certain SRS (target SRS) resource, when spatial relation information on another SRS (reference SRS) and the SRS (target SRS) is configured, the UE may transmit the target SRS resource by using the same spatial domain filter (spatial domain transmission filter) as a spatial domain filter (spatial domain transmission filter) for transmitting the reference SRS. That is, in this case, the UE may assume that the UE transmission beam of the reference SRS and the UE transmission beam of the target SRS are the same.

The UE may determine the spatial relation of the PUSCH scheduled by the DCI based on a value of a given field (for example, SRS resource identifier (SRI) field) in the DCI (for example, DCI format 0_1). Specifically, the UE may use the spatial relation information (for example, "spatialRelationInfo" of the RRC information element) of the SRS resource determined based on the value (for example, SRI) of the given field for the PUSCH transmission.

In Rel. 15/16 NR, when using the codebook-based transmission for the PUSCH, the UE may configure an SRS resource set having up to two SRS resources and whose application is a codebook by RRC, and one of the up to two SRS resources may be indicated by DCI (1-bit SRI field). The transmission beam of the PUSCH will be specified by the SRI field.

The UE may determine the TPMI and the number of layers (transmission rank) for the PUSCH based on precoding information and the number of layers field (hereinafter, also referred to as a precoding information field). The UE may select, based on the TPMI, the number of layers, and the like, the precoder from the codebook for the uplink for the same number of ports as the number of SRS ports indicated by "nrofSRS-Ports" in the higher layer parameter configured for the SRS resource designated by the SRI field.

In Rel. 15/16 NR, when using non-codebook-based transmission for the PUSCH, the UE may configure an SRS resource set having up to four SRS resources and whose application is a non-codebook by RRC, and one or more of the up to four SRS resources may be indicated by DCI (2-bit SRI field).

The UE may determine the number of layers (transmission rank) for the PUSCH based on the SRI field. For example, the UE may determine that the number of SRS resources designated by the SRI field is the same as the number of layers for the PUSCH. In addition, the UE may calculate the precoder of the SRS resource.

When a CSI-RS (which may be referred to as an associated CSI-RS) related to the SRS resource (or the SRS resource set to which the SRS resource belongs) is configured in the higher layer, the transmission beam of the PUSCH may be calculated based on (measurement of) the configured related CSI-RS. Otherwise, the transmission beam of the PUSCH may be designated by the SRI.

It is noted that the UE may configure whether to use codebook-based PUSCH transmission or non-codebook-based PUSCH transmission by a higher layer parameter "txConfig" indicating a transmission scheme. The parameter may indicate a value of the "codebook" or the "noncodebook".

In the present disclosure, the codebook-based PUSCH (codebook-based PUSCH transmission, codebook-based transmission) may mean a PUSCH in a case where a "codebook" is configured in the UE as a transmission scheme. In the present disclosure, the non-codebook-based PUSCH (non-codebook-based PUSCH transmission, non-codebook-based transmission) may mean a PUSCH in a case where a "noncodebook" is configured in the UE as a transmission scheme.

### <UL TCI state>

In NR, it is considered to use a UL TCI state as a beam indication method for the UL. The UL TCI state is similar to notification of a DL beam (DL TCI state) of the UE. It is noted that the DL TCI state may be mutually replaced with a TCI state for a PDCCH/PDSCH.

The UL TCI state may be configured for the UE by spatial relation information (for example, spatialRelationInfo-r17 defined in Rel. 17) (which may also be referred to as UL TCI state information) defined in a particular release. The UL TCI state may be referred to as a unified TCI state (U-TCI state), or may be referred to as a spatial relation, a spatial relation of a specific release, or the like.

One or more of the configured UL TCI states may be activated/deactivated using the MAC CE. Further, from the configured/activated UL TCI state, the spatial relation information for at least one of the A-SRS, the PUSCH, the PUCCH, and the PRACH may be designated to the UE by the DCI.

The channel/signal (which may be referred to as a target channel/RS) for which the UL TCI state is configured (designated) may be, for example, at least one of a PUSCH, a demodulation reference signal (DMRS) for the PUSCH, a PUCCH, a DMRS for the PUCCH, a physical random access channel (PRACH), an SRS, and the like.

Further, an RS (reference RS) having a QCL relation with the channel/signal may be, for example, a DL RS (for example, SSB, CSI-RS, TRS, and the like) or a UL RS (for example, SRS, SRS for beam management, and the like).

In the UL TCI state, the RS having the QCL relation with the channel/signal may be associated with a panel (panel ID) for receiving or transmitting the RS. The association may be explicitly configured (or designated) by higher layer signaling (for example, RRC signaling, MAC CE, and the like), or implicitly determined.

Correspondence between the RS and the panel ID may be configured by being included in UL TCI state information, or may be configured by being included in at least one of resource configuration information, spatial relation information, and the like of the RS.

A QCL type indicated by the UL TCI state may be the existing QCL type A-D, or may be another QCL type, or may include a given spatial relation, an associated antenna port (port index), or the like.

For UL transmission, when an associated panel ID is designated (for example, designated by DCI), the UE may perform the UL transmission using a panel corresponding to the panel ID. The panel ID may be associated with the UL TCI state, and when the UL TCI state is designated (or activated) for a given UL channel/signal, the UE may specify the panel used for the UL channel/signal transmission in accordance with the panel ID associated with the UL TCI state.

However, the way of controlling the TCI state including the existing TCI state (TCI state for downlink (DL)) when the UL TCI state is introduced has not yet been studied. If this control is not clarified, an increase in communication throughput may be suppressed.

Therefore, the present inventors have conceived a method of appropriately controlling the TCI state. For example, in one aspect of the present disclosure, configurations of the specific RRC signaling, the MAC CE, or the like for configuring/activating the TCI state are presented.

Hereinafter, embodiments according to the present disclosure will be described in detail with reference to the drawings. The radio communication method according to each of the embodiments may be applied independently, or may be applied in combination with others. It is noted that embodiments of the present disclosure may be utilized when no UL TCI state is introduced.

It is noted that in the present disclosure, "A/B" may indicate "at least one of A and B".

In the present disclosure, activate, deactivate, indicate, select, configure, update, determine, and the like may be replaced with each other.

In the present disclosure, a panel, a beam, a panel group, a beam group, an uplink (UL) transmission entity, a TRP, spatial relation information (SRI), a spatial relation, a control resource set (control resource set (CORESET)), a physical downlink shared channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, and a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state (unified TCI state), a QCL, and the like, may be replaced with each other.

In addition, the spatial relation information Identifier (ID) (TCI state ID) and the spatial relation information (TCI state) may be replaced with each other. The "spatial relation information" may be replaced with a "set of spatial relation information", "one or a plurality of pieces of spatial relation information", or the like. The TCI state and the TCI may be replaced with each other.

In the present disclosure, the index, the ID, the indicator, the resource ID may be replaced with each other. In addition, in the present disclosure, a sequence, a list, a set, a group, a cloud, a cluster, a subset, and the like may be replaced with each other.

In the following embodiments, the spatial relation information (spatialRelationInfo), the spatial relation information defined in a specific release (for example, spatialRelationInfo-r17 defined in Rel. 17), the TCI state defined in a specific release (for example, TCI-state-r17 defined in Rel. 17), and the like may be replaced with each other.

In addition, in the following embodiment, the spatial relation information ID (spatialRelationInfoId), the spatial relation information ID (for example, spatialRelationInfoId-r17 defined in Rel. 17) defined in a specific release, the TCI state ID (for example, TCIstateId-r17 defined in Rel. 17) defined in a specific release, and the like may be replaced with each other. It is noted that the names of these parameters are not limited thereto.

In the following description of embodiments, the "spatial relation information (SRI)", the "spatial relation information for the PUSCH", the "spatial relation", the "UL beam", the "transmission beam of the UE", the "UL TCI", the "UL TCI state", the "spatial relation of the UL TCI state", the SRS resource indicator (SRI), the SRS resource, the precoder, and the like may be replaced with each other.

### (Radio Communication Method)

### <First Embodiment>

A first embodiment relates to the RRC configuration of the TCI state that can be used in common by the DL and the UL. The first embodiment is roughly divided into embodiments 1.1 to 1.4, and each of the embodiments will be described below.

### [Embodiment 1.1]

In a TCI state of an embodiment 1.1, downlink RS (DL RS) (for example, CSI-RS/SSB) can be configured as the reference RS, and QCL type A/B/C/D can be configured as the QCL type.

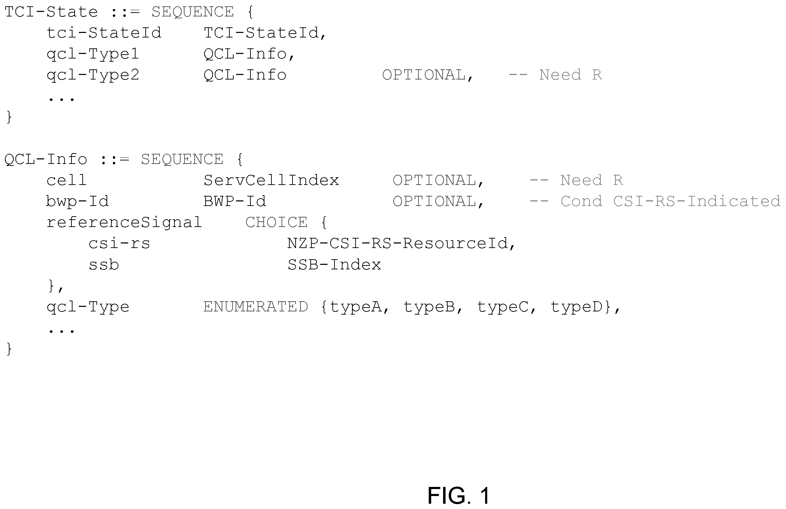

Fig. 1 is a diagram illustrating an example of an RRC configuration for a TCI state according to the embodiment 1.1. This example is described using Abstract Syntax Notation One (ASN.1) notation (it is noted that, since this is merely an example, there is a possibility that this is not a complete description). The following drawings may also be described using the ASN.1 notation.

It is noted that, in the present disclosure, the name of the RRC information element, the RRC parameter, or the like may be given a suffix (for example, "_r16", "_r17", "-r16", "-r17", or the like) indicating that the RRC information element, the RRC parameter, or the like has been introduced in a specific resource. The suffix may not be added.

The TCI-state which is the RRC information element of the TCI state may include a TCI-StateId indicating a TCI state ID and QCL-Info which is one or more pieces of QCL information.

The QCL information may include information such as ServCellIndex which is an index of a cell in which the reference RS is transmitted (located) and BWP-Id which is an index of a BWP in which the reference RS is transmitted. When the CSI-RS (or SSB) is indicated as the reference RS, the BWP-Id may be indicated by a parameter bwp-Id indicating an index of the DL BWP in which the reference RS is transmitted.

The QCL information may include a parameter referenceSignal (which may also be referred to as reference RS information) indicating the reference RS. The reference RS information may include an index (for example, NZP CSI-RS resource ID (NZP-CSI-RS-ResourceId), and SSB Index) of the DL RS.

The QCL information may include a QCL type parameter (qcl-Type) indicating any one of the QCL types A to D.

The TCI state of the embodiment 1.1 may be applied only to the DL (may be used only as the DL TCI state), may be applied only to the UL (may be used only as the UL TCI state), or may be applied to both the DL and the UL.

It is noted that, in the present disclosure, applying the TCI state only to the DL may mean that only a DL channel/signal may refer to (or be associated with) this TCI state. Further, in the present disclosure, applying the TCI state only to the UL may mean that only a UL channel/signal may refer to (or be associated with) this TCI state. In addition, in the present disclosure, the fact that the TCI state is applied to both the DL and the UL may mean that both the DL channel/signal and the UL channel/signal may refer to (or be associated with) this TCI state.

In addition, in the present disclosure, "a certain TCI state is applied to the DL" may be replaced with "a target channel/signal in a certain TCI state is a DL channel/signal", "a certain TCI state is used as a DL TCI state", or the like.

In the present disclosure, the DL channel/signal to which the TCI state is applied may be, for example, the PDSCH, the PDCCH (CORESET), the CSI-RS, the SSB, the DMRS, and the like.

In addition, in the present disclosure, "a certain TCI state is applied to the UL" may be replaced with "a target channel/signal in a certain TCI state is a UL channel/signal", "a certain TCI state is used as the UL TCI state", or the like.

In the present disclosure, the DL channel/signal to which the TCI state is applied may be, for example, the PUSCH, the PUCCH, the SRS, the DMRS, or the like.

### [Embodiment 1.2]

In a TCI state of an embodiment 1.2, at least one of the DL RS (for example, CSI-RS/SSB) and the uplink RS (UL RS) (for example, SRS) can be configured as the reference RS, and QCL type A/B/C/D can be configured as the QCL type.

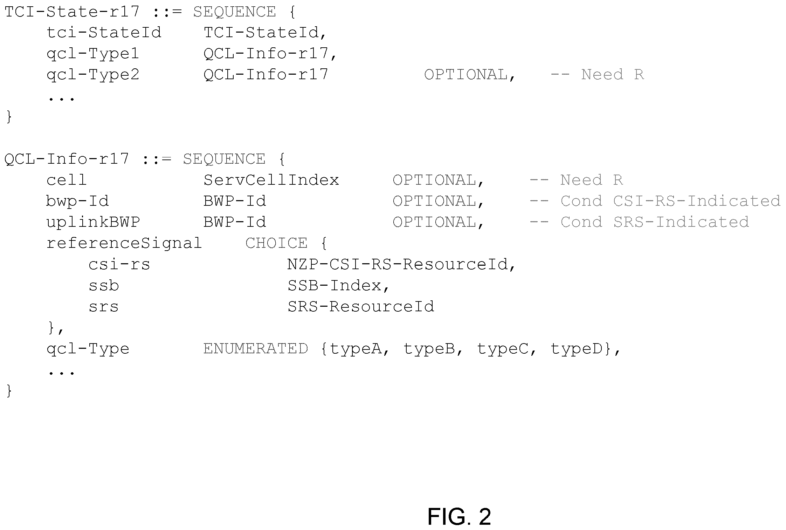

Fig. 2 is a diagram illustrating an example of an RRC configuration for a TCI state according to the embodiment 1.2. Hereinafter, differences from Fig. 1 in Fig. 2 will be described, and the same description will not be repeated.

The TCI-state-r17 which is the RRC information element in the TCI state may include QCL-Info-r17 which is one or more pieces of QCL information.

The QCL information in Fig. 2 may include an index of the UL RS (for example, the SRS resource ID (SRS-ResourceId)) as the reference RS information. When the SRS is indicated as the reference RS, the QCL information may include parameter uplinkBWP indicating the index of UL BWP in which the reference RS is transmitted.

In a case where the TCI state of the embodiment 1.2 is used as the DL TCI state and the SRS is configured as the reference RS, it may be assumed that only the QCL type D is configured as the QCL type parameter. In this case, the QCL type D may be interpreted such that the spatial domain filter for DL reception is the same as the spatial domain filter for UL transmission (in other words, the same spatial transmission/reception parameters are applied between two UL/DL antenna ports (or UL/DL RSs).

The existing QCL type D of Rel. 15/16 means that spatial reception parameters are the same between two DL antenna ports (or DL RSs), and by using the above interpretation, it is possible to use a uniform QCL type in the DL-UL without newly defining a QCL type.

In addition, in a case where the TCI state of the embodiment 1.2 is used as the UL TCI state, and in a case where the SRS/CSI-RS/SSB is configured as the reference RS, it may be assumed that only the QCL type D is configured as the QCL type parameter. In this case, the QCL type D may be interpreted such that the spatial domain filter for UL transmission is the same as the spatial domain filter for UL transmission/DL reception (in other words, the same spatial transmission/reception parameters are applied between two UL/DL antenna ports (or UL/DL RSs).

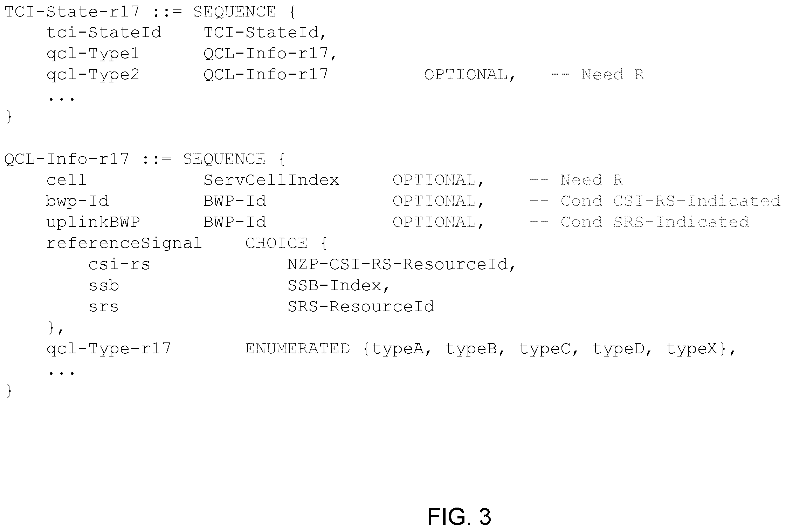

Fig. 3 is a diagram illustrating another example of the RRC configuration in the TCI state in the embodiment 1.2. Hereinafter, differences from Fig. 2 in Fig. 3 will be described, and the same description will not be repeated.

A QCL type parameter (qcl-Type-r17) in Fig. 3 may indicate at least one of the new QCL types (in the present disclosure, referred to as QCL types X, Y, and Z, or the like) in addition to or in place of at least one of the QCL types A to D. In Fig. 3, the value of the QCL type parameter may take the QCL type A, B, C, D, or X.

The QCL type X may indicate that the spatial domain filter for DL reception is the same as the spatial domain filter for UL transmission when the TCI state is used as the DL TCI state and the SRS is configured as the reference RS.

The QCL type Y may indicate that the spatial domain filter for UL transmission is the same as the spatial domain filter for UL transmission when the TCI state is used as the UL TCI state and the SRS is configured as the reference RS.

The QCL type Z may indicate that the spatial domain filter for UL transmission is the same as the spatial domain filter for DL reception when the TCI state is used as the UL TCI state and the CSI-RS/SSB is configured as the reference RS.

It is noted that a common QCL type that can mean a plurality (for example, all) of these QCL types X, Y, and Z may be defined. For example, a common QCL type (for example, the same may be referred to as QCL type XY or the like) that is interpreted as the QCL type X when the TCI state is used as the DL TCI state and that is interpreted as the QCL type Y when the TCI state is used as the UL TCI state may be defined and configured to the qcl-Type-r17.

The TCI state of the embodiment 1.2 may be applied only to the DL, only to the UL, or both to the DL and the UL.

### [Embodiment 1.3]

In a TCI state of an embodiment 1.3, at least one of the DL RS (for example, CSI-RS/SSB) and the UL RS (for example, SRS) can be configured as the reference RS, but the QCL type is not configured.

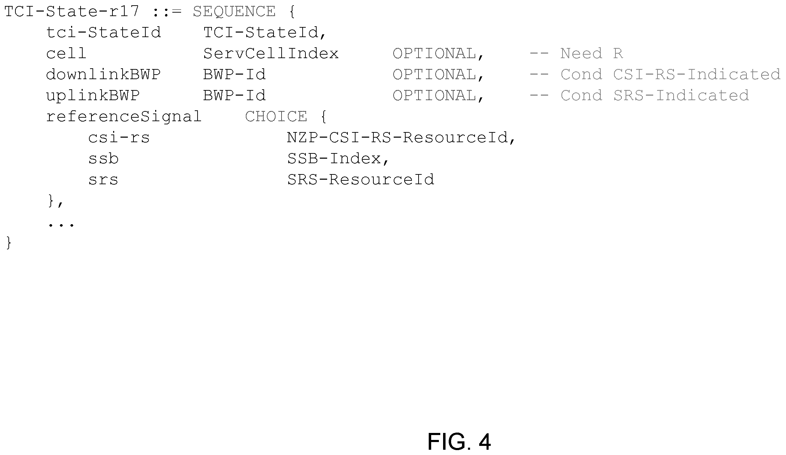

Fig. 4 is a diagram illustrating an example of an RRC configuration of a TCI state in the embodiment 1.3. Hereinafter, differences from Fig. 2 in Fig. 4 will be described, and the same description will not be repeated.

The TCI-state-r17 which is the RRC information element in the TCI state in Fig. 4 does not include the QCL-Info-r17 (indicated by an RRC parameter qcl-Type 1/2 including the QCL type information) indicating the QCL information in Fig. 2, and has a configuration of directly including RRC parameters other than a QCL type parameter (qcl-Type/qcl-Type-r17) in the QCL-Info-r17.

It is noted that, in a case where the reference RS is the DL RS, the name of the parameter bwp-Id indicating the index of the DL BWP is changed to downlinkBWP, but the parameter name is not limited thereto (in the present disclosure, these names may be replaced with each other).

The QCL type of the TCI state in the embodiment 1.3 is not explicitly configured, but may be implicitly determined (derived) from other parameters. For example, when the TCI state is used as the DL TCI state and the SRS is configured as the reference RS, it may be determined that the QCL type of the TCI state is the QCL type X described in the embodiment 1.2. The QCL types Y, Z, and the like may also be determined based on the description of the embodiment 1.2.

According to the RRC configuration of the TCI state of the embodiment 1.3, since the QCL type parameter is not explicitly included, an increase in communication overhead relating to the configuration of the TCI state can be suppressed.

The TCI state of the embodiment 1.3 may be applied only to the DL, only to the UL, or both to the DL and the UL.

### [Embodiment 1.4]

A TCI state of an embodiment 1.4 includes both QCL information for the DL and QCL information for the UL.

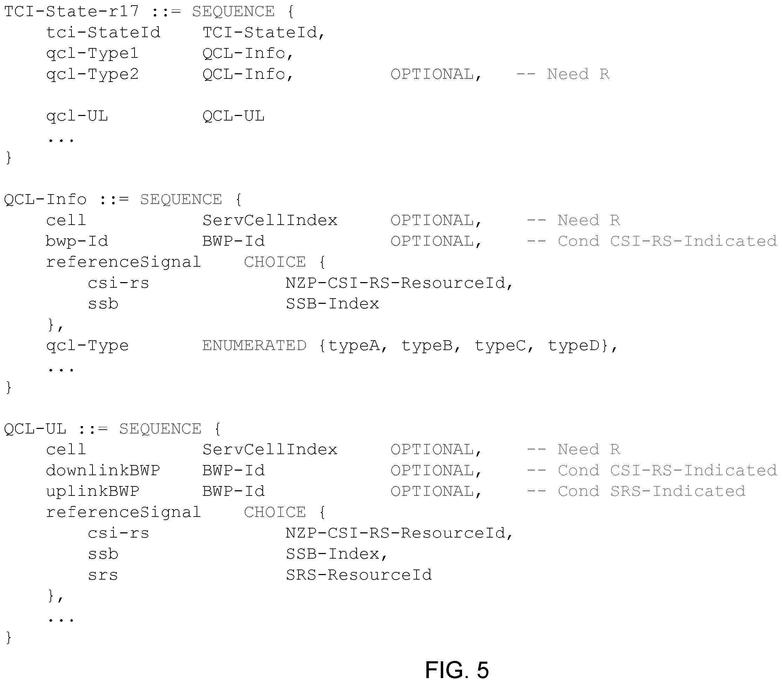

Fig. 5 is a diagram illustrating an example of an RRC configuration of a TCI state in the embodiment 1.4. Hereinafter, differences from the previous drawings in Fig. 5 will be described, and the same description will not be repeated.

The TCI-state-r17 which is the RRC information element in the TCI state in Fig. 5 includes QCL-Info (indicated by the RRC parameter qcl-Type 1/2 including the QCL type information) indicating the QCL information for the DL and QCL-UL indicating the QCL information for the UL. In this way, the QCL information of the embodiment 1.4 may be represented by different RRC parameters for the DL and the UL.

This QCL-Info may be the same as the QCL-Info in Fig. 1. Furthermore, contents of the QCL-UL may be, for example, obtained by deleting the QCL type parameter (qcl-Type/qcl-Type-r17) from the QCL-Info-r17 in Fig. 2. The QCL type related to the QCL information for the UL in the embodiment 1.4 may be implicitly determined as in the embodiment 1.3.

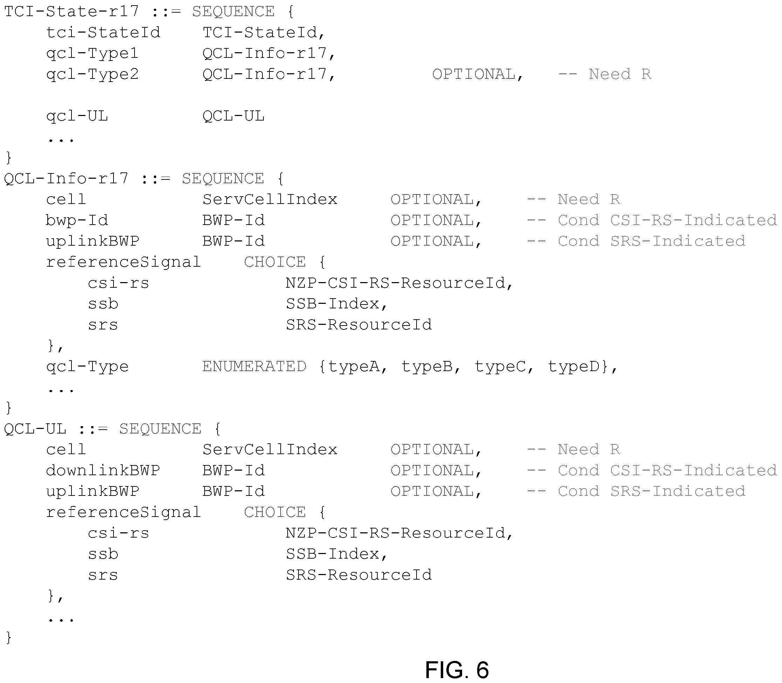

Fig. 6 is a diagram illustrating another example of the RRC configuration in the TCI state in the embodiment 1.4. Hereinafter, differences from Fig. 5 in Fig. 6 will be described, and the same description will not be repeated.

The TCI-state-r17 which is the RRC information element in the TCI state in Fig. 6 includes the QCL-Info-r17 in Fig. 2 instead of the QCL-Info as the QCL information for the DL. It is noted that the QCL-Info-r17 may be the QCL-Info-r17 in Fig. 3.

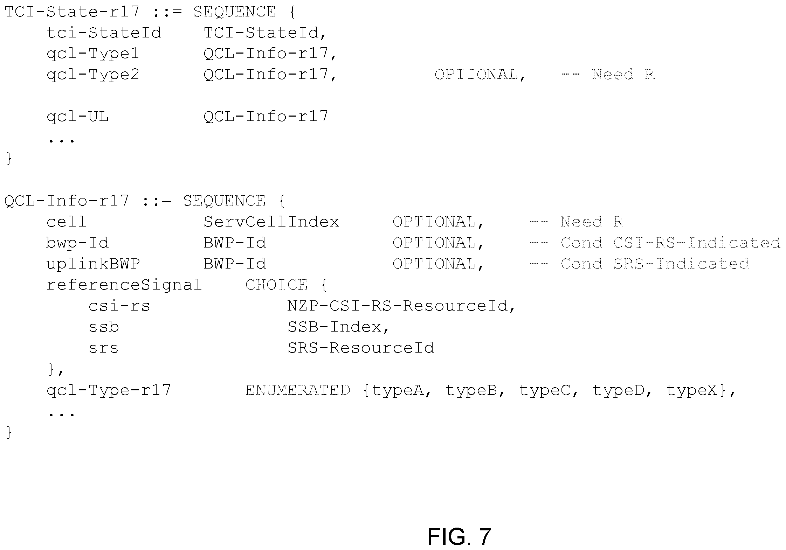

Fig. 7 is a diagram illustrating still another example of the RRC configuration in the TCI state in the embodiment 1.4. Hereinafter, differences from Fig. 5 in Fig. 7 will be described, and the same description will not be repeated.

The TCI-state-r17 which is the RRC information element in the TCI state in Fig. 7 uses the QCL-Info-r17 in Fig. 3 as both the QCL information for the DL and the QCL information for the UL. When the SRS is configured as the reference RS for the DL or the CSI-RS/SSB/SRS is configured as the reference RS for the UL, the QCL type D or the new QCL type may be configured as the QCL type.

The TCI state of the embodiment 1.4 may be applied to both the DL and the UL.

According to the first embodiment described above, the RRC configuration of the TCI state can be appropriately configured.

### <Second Embodiment>

A second embodiment relates to an RRC configuration for a set of one or more TCI states of at least one of the DL and the UL. The second embodiment is roughly divided into embodiments 2.1 to 2.4, and each of the embodiments will be described below.

### [Embodiment 2.1]

A set of TCI states of the embodiment 2.1 corresponds to a common set for both the DL and the UL. The set includes one or more TCI states. Each TCI state in the set applies to both the DL and the UL (that is, each TCI state may be used as the DL TCI state or the UL TCI state).

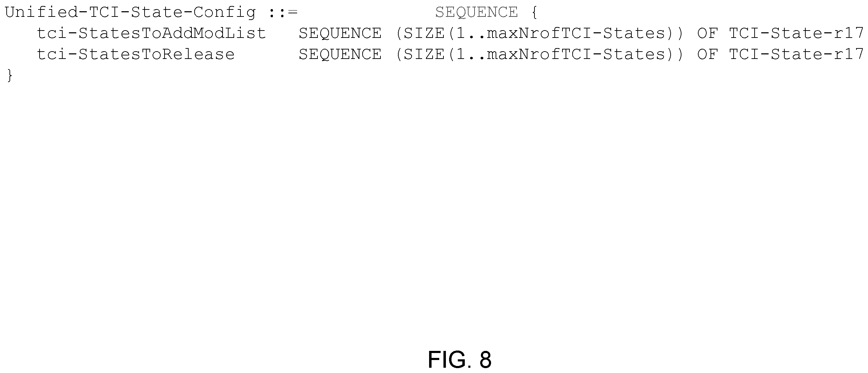

Fig. 8 is a diagram illustrating an example of an RRC configuration of a set of TCI states in the embodiment 2.1.

In Fig. 8, Unified TCI-State-Config, which is the RRC information element for the configuration of the unified TCI state, may include RRC parameter tci-StatesToAddModList, which is a list of one or more maximum maxNrofTCI-States unified TCI states (for example, the TCI-State-r17, the TCI-State, and the like as described in the first embodiment). tci-StatesToRelease may be used to release the TCI state from the list.

It is noted that the maxNrofTCI-States may represent the maximum number of unified TCI states that can be configured for the UE, may be defined in advance by a specification, may be configured by higher layer signaling, or may be determined based on the UE capability.

The UE may apply the TCI state configured by the Unified-TCI-State-Config as at least one of the DL TCI state and the UL TCI state.

### [Embodiment 2.2]

A set of TCI states of the embodiment 2.2 corresponds to a common set for both the DL and the UL. The set includes one or more TCI states. The embodiment 2.2 is different from the embodiment 2.1 in that a subset of the UL TCI states (subset for UL) and a subset of the DL TCI states (subset for DL) are further selected from the TCI states included in the common set.

These subsets may be configured by the RRC, activated by the MAC CE, or designated by the DCI.

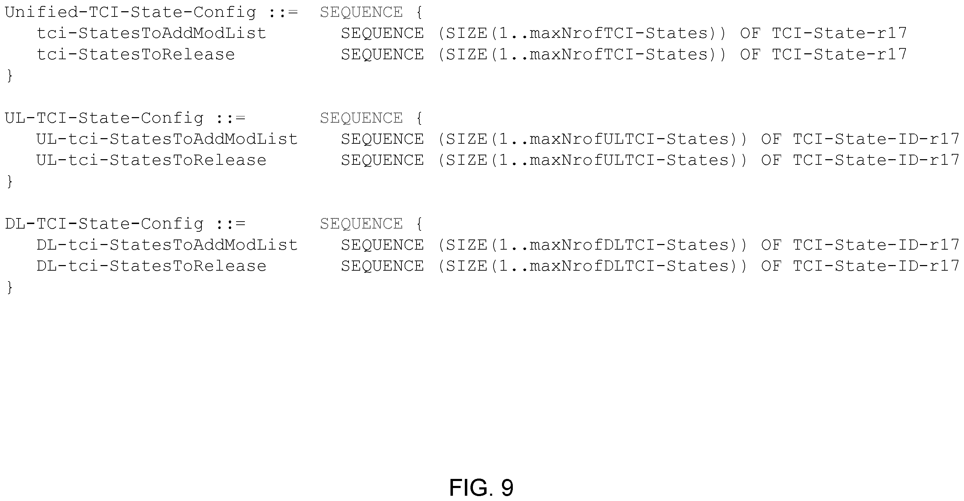

Fig. 9 is a diagram illustrating an example of an RRC configuration of a set of TCI states in the embodiment 2.2. This example corresponds to a case where a set of common TCI states is configured by the RRC, and from the common set, a subset of the UL TCI states and a subset of the DL TCI states are configured by the RRC. Since the Unified TCI-State-Config is similar to that in Fig. 8, a description thereof will not be repeated.

In Fig. 9, UL-TCI-State-Config, which is an RRC information element of the configuration for the UL TCI state, may include an RRC parameter UL-tci-StatesToAddModList, which is a list of one or more maximum maxNrofULTCI-States TCI states ID (ID of TCI-State-r17 (may be expressed as TCI-StateId, TCI-State-ID-r17, or the like)). UL-tci-StatesToRelease may be used to release the TCI state from the list.

It is noted that the maxNrofULTCI-States may represent the maximum number of UL TCI states that can be configured for the UE, may be defined in advance by a specification, may be configured by higher layer signaling, or may be determined based on the UE capability.

In Fig. 9, DL-TCI-State-Config, which is an RRC information element of the configuration for the DL TCI state, may include an RRC parameter DL-tci-StatesToAddModList, which is a list of one or more maximum maxNrofDLTCI-States TCI states ID (ID of TCI-State-r17 (may be expressed as TCI-StateId, TCI-State-ID-r17, or the like)). DL-tci-StatesToRelease may be used to release the TCI state from the list.

It is noted that the maxNrofDLTCI-States may represent the maximum number of DL TCI states that can be configured for the UE, may be defined in advance by a specification, may be configured by higher layer signaling, or may be determined based on the UE capability.

In the present disclosure, the maxNrofULTCI-States, the maxNrofDLTCI-States, and the like may be the same value or may be replaced with the maxNrofTCI-States.

As such, a certain TCI state (TCI-State-r17) may refer to the UL TCI state when configured (for example, included in UL-TCI-State-Config) in association with the UL TCI state, and may refer to the DL TCI state when configured (for example, included in DL-TCI-State-Config) in association with the DL TCI state.

The UE may assume that one TCI state is associated with only one of the DL TCI state and the UL TCI state, or one TCI state may be associated with both the DL TCI state and the UL TCI state.

A case where a total of eight TCI states of TCI states ID = 1 to 8 are configured in the common set will be described as an example. In the former assumption, for example, the TCI states ID = 1 to 4 are associated with the UL TCI state and the TCI states ID = 5 to 8 are associated with the DL TCI state. In the latter assumption, for example, the TCI states ID = 1 to 4 are associated with the UL TCI state and the TCI states ID = 3 to 6 are associated with the DL TCI state (TCI states ID = 3 and 4 are associated with both the DL and the UL).

It is noted that, in the above example, the subset of the UL TCI state and the subset of the DL TCI state are selected from the common set, but the present invention is not limited thereto. For example, when one set (for example, unified-TCI-State-Config) is configured as the set for one of the UL TCI state and the DL TCI state, a subset for the other of the UL TCI state and the DL TCI state may be selected from the set. If the unified-TCI-State-Config indicates a set of DL TCI states, the UL-TCI-State-Config for the UL TCI state may be configured, and the DL-TCI-State-Config for the DL TCI state does not need to be separately configured.

The UE may determine that a TCI state of a first range indicates the DL TCI state and a TCI state of a second range indicates the UL TCI state in the common set. For example, the UE may determine that the 0-th to X-th entries in the list of common sets (UL-tci-StatesToAddModList) indicate the DL and the (X + 1)-th to Yth entries indicate the UL. The UE may determine that the 0th to X-th entries in the list of common sets (UL-tci-StatesToAddModList) indicate the DL and the 0-th to Y-th entries indicate the UL. As described above, the first range and the second range may overlap each other (in the case of overlapping, the same are used as both the DL TCI state and the UL TCI state).

It is noted that the "i-th entry" herein may be replaced with the i-th TCI state from the smaller (or larger) TCI state ID among the TCI states included in the common set.

The first range, the second range, and the like (for example, the value of X, the value of Y, the starting position of the range (0, X + 1, and the like in the above example)) may be defined in advance by a specification, may be configured by higher layer signaling, or may be determined based on the UE capability.

The UE may apply the TCI state related to the configured UL-TCI-State-Config as the UL TCI state. The UE may apply the TCI state related to the configured DL-TCI-State-Config as the DL TCI state.

### [Embodiment 2.3]

A set of TCI states in the embodiment 2.3 corresponds to a separate set for the DL and a separate set for the UL. These sets include one or more TCI states. In the embodiment 2.3, no common set is configured.

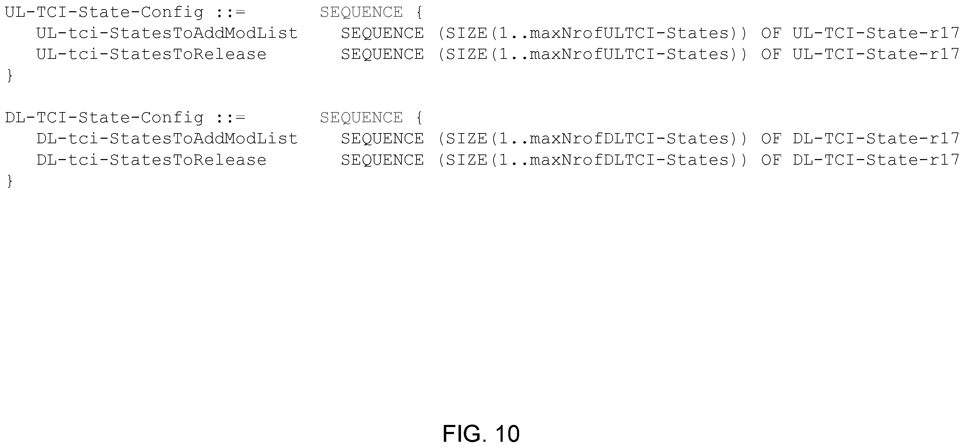

Fig. 10 is a diagram illustrating an example of an RRC configuration of a set of TCI states in the embodiment 2.3. In Fig. 10, the UL-TCI-State-Config, which is an RRC information element of the configuration for the UL TCI state similar to Fig. 9, and the DL-TCI-State-Config, which is an RRC information element of the configuration for the DL TCI state, are illustrated. Unlike Fig. 9, UL-tci-StatesToAddModList of UL-TCI-State-Config is a list of RRC information elements UL-TCI-State-r17 dedicated to the UL TCI states, and DL-tci-StatesToAddModList of DL-TCI-State-Config is a list of RRC information elements DL-TCI-State-r17 dedicated to the DL TCI states.

The actual state of the UL-TCI-State-r17 and the DL-TCI-State-r17 may correspond to the TCI-State-r17, the TCI-State, and the like as described in the first embodiment. The UL-TCI-State-r17 and the DL-TCI-State-r17 are independent and show different TCI states, for example, even if the TCI states ID are the same.

The UE may apply the TCI state related to the configured UL-TCI-State-Config as the UL TCI state. The UE may apply the TCI state related to the configured DL-TCI-State-Config as the DL TCI state.

### [Embodiment 2.4]

The embodiment 2.4 corresponds to a plurality of combinations of the embodiments 2.1 to 2.3.

For example, a combination of the embodiments 2.1 and 2.2 is considered. The UE may apply the configuration of the common TCI state (for example, Unified TCI-State-Config) to both the UL and the DL based on the embodiment 2.1 if the configuration for the UL TCI/DL TCI state (for example, UL-TCI-State-Config/DL-TCI-State-Config) is not configured, otherwise (if the configuration for the UL TCI/DL TCI state is configured), the configuration for the UL TCI/DL TCI state may be applied to the UL/DL based on the embodiment 2.2.

For example, a combination of the embodiments 2.1 and 2.3 is considered. The UE may apply the configuration of the common TCI state (for example, Unified TCI-State-Config) to both the UL and the DL based on the embodiment 2.1 if the configuration for the UL TCI/DL TCI state (for example, UL-TCI-State-Config/DL-TCI-State-Config) is not configured, otherwise (if the configuration for the UL TCI/DL TCI state is configured), the configuration for the UL TCI/DL TCI state may be applied to the UL/DL based on the embodiment 2.3.

According to the second embodiment described above, for example, the RRC configuration of the DL TCI state/the UL TCI state can be appropriately formed.

### <Third Embodiment>

A third embodiment relates to a MAC CE that activates a TCI state.

The MAC CE may activate both the DL and UL TCI states, or may separately activate the DL TCI state and the UL TCI state.

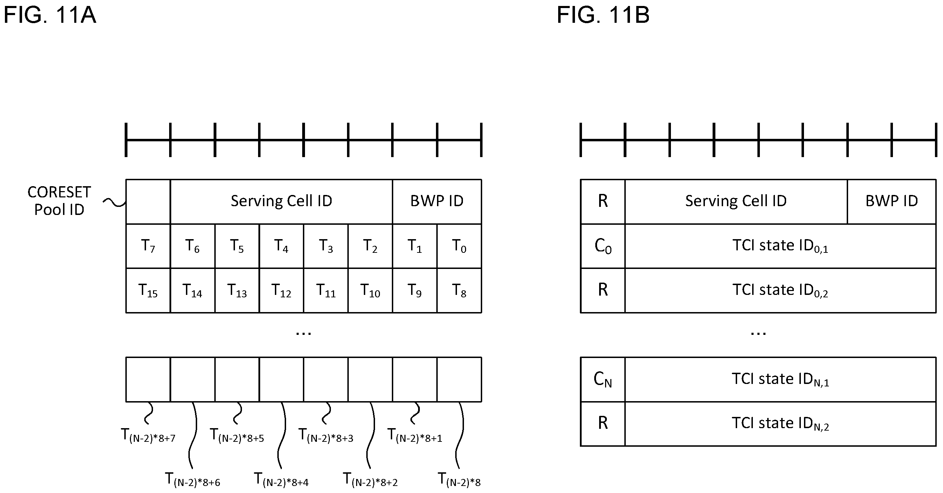

Figs. 11A and 11B are diagrams illustrating an example of TCI state activation/deactivation MAC CE in the third embodiment. The MAC CE may be used to activate/deactivate a TCI state for a specific channel/signal (for example, PDSCH, PUSCH, PDCCH, PUCCH, SRS, CSI-RS, and the like).

The MAC CE in Fig. 11A includes a CORESET pool ID field, a serving cell ID field, a BWP ID field, and a Tᵢ field. It is noted that an R field indicates a reservation field scheduled to be used in the future.

The serving cell ID field and the BWP ID field indicate a serving cell and a BWP to which the MAC CE is applied.

The Tᵢ field, when set to 1, may indicate that the TCI state having a TCI state ID i (or having the i-th smallest or largest TCI state ID among the configured TCI state/DL TCI state/UL TCI state) is activated and mapped to a code point of a TCI field of the DCI. The code point to which the TCI state is mapped may be determined by the position indicating the order in all the TCI states with the Tᵢ field set to 1.

The CORESET pool ID field may indicate that mapping between the activated TCI state and the code point of the TCI field of the DCI set by the Tᵢ field is specific to the CORESET in which the CORESET pool ID is configured. The CORESET pool ID field may be absent.

The MAC CE in Fig. 11B includes a serving cell ID field, a BWP ID field, a Cᵢ field, and a TCI state ID_{i,j} field.

The Cᵢ field indicates whether an octet including the TCI state ID_{i,2} field exists. The TCI state ID_{i,j} field may indicate a j-th activated TCI state mapped to the code point (i) of the DCI field (for example, TCI field) indicating the TCI state. The TCI code point to which the TCI state is mapped may be determined by the position indicating the order in all the TCI code points with the set of TCI state ID_{i,j} fields.

The UE may determine the TCI state to be applied to the specific channel/signal (for example, PDSCH, PUSCH, PDCCH, PUCCH, SRS, CSI-RS, and the like) based on at least one of the TCI state configured by the RRC parameter described in the first and second embodiments, the TCI state activated by the MAC CE described in the third embodiment, the TCI state specified by the DCI from the configured or activated TCI state, and the like.

It is noted that the MAC CE for activating the TCI state of the present disclosure is not limited to Figs. 11A and 11B.

According to the third embodiment described above, for example, the MAC CE for activating the DL TCI state/the UL TCI state can be appropriately configured.

### <Other Embodiments>

In the present disclosure, the configuration of the TCI state (set) described in the first and second embodiments, the activation of the TCI state described in the third embodiment, and the like may be performed in at least one unit as follows:
· all UL, DL channels/signals,
· all UL channels/signals,
· all DL channels/signals,
· each channel/signal.

In other words, one RRC configuration/one activation for the TCI state may be applied to all channels/signals in common, only to the UL, only to the DL, or only to a specific channel/signal (for example, PDSCH, PUSCH, PDCCH, PUCCH, SRS, CSI-RS, and the like).

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

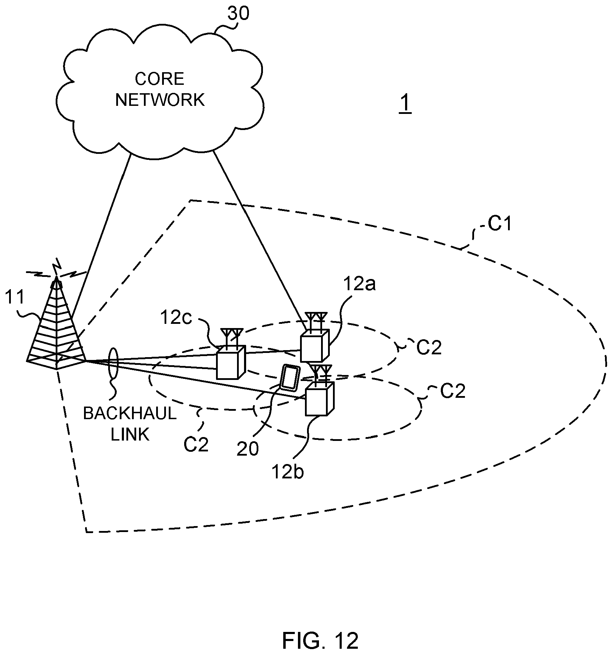

Fig. 12 is a diagram illustrating an example of a schematic configuration of a radio communication system according to one embodiment. A radio communication system 1 may be a system configured to implement communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, the NR base station (gNB) is the MN, and the LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 configured to form a macro cell C1 with a relatively wide coverage, and base stations 12 (12a to 12c) disposed within the macro cell C1 and configured to form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). It is noted that the frequency bands, definitions, and the like of the FR1 and the FR2 are not limited thereto, and, for example, the FR1 may correspond to a frequency band higher than the FR2.

In addition, the user terminal 20 may perform communication in each CC using at least one of time division duplex (TDD) and frequency division duplex (FDD).

The plurality of base stations 10 may be connected to each other by wire (for example, an optical fiber or an X2 interface in compliance with common public radio interface (CPRI)) or wirelessly (for example, NR communication). For example, when the NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), and a next generation core (NGC).

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

In addition, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, the higher layer control information, and the like. In addition, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. It is noted that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

It is noted that, in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. It is noted that, the SS, the SSB, or the like may also be referred to as a reference signal.

In addition, in the radio communication system 1, a sounding reference signal (SRS), a demodulation reference signal (DMRS), or the like may be transmitted as an uplink reference signal (UL-RS). It is noted that, DMRSs may be referred to as user terminal-specific reference signals (UE-specific Reference Signals).

### (Base Station)

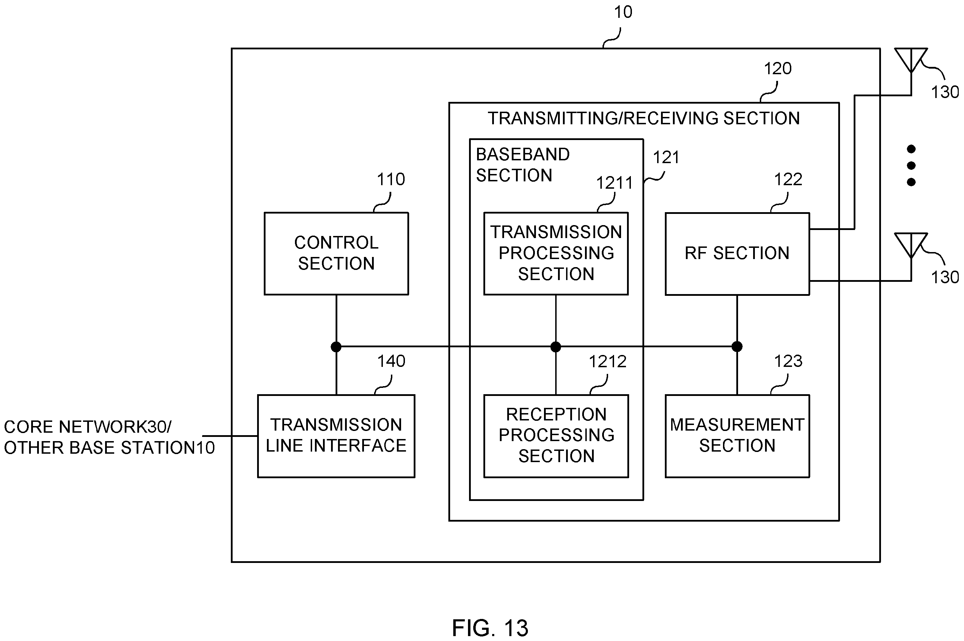

Fig. 13 is a diagram illustrating an example of a configuration of a base station according to one embodiment. The base station 10 includes a control section 110, a transmitting/receiving section 120, a transmitting/receiving antenna 130, and a transmission line interface 140. It is noted that one or more control sections 110, one or more transmitting/receiving sections 120, one or more transmitting/receiving antennas 130, and one or more transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data, control information, a sequence, and the like to be transmitted as signals, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

It is noted that the transmitting section and the receiving section of the base station 10 in the present disclosure may include at least one of the transmitting/receiving section 120, the transmitting/receiving antenna 130, and the transmission line interface 140.

It is noted that the transmitting/receiving section 120 may transmit, to the user terminal 20, a radio resource control (RRC) parameter for a TCI state that can be used as both a transmission configuration indication state (TCI state) for downlink (DL) and a TCI state for uplink (UL).

The control section 110 may assume that the user terminal 20 determines (judges) that the RRC parameter can be used for at least one of the TCI state for the DL and the TCI state for the UL (determines and uses the RRC parameter for beam control and the like) based on which set of TCI states the RRC parameter is associated with.

### (User Terminal)

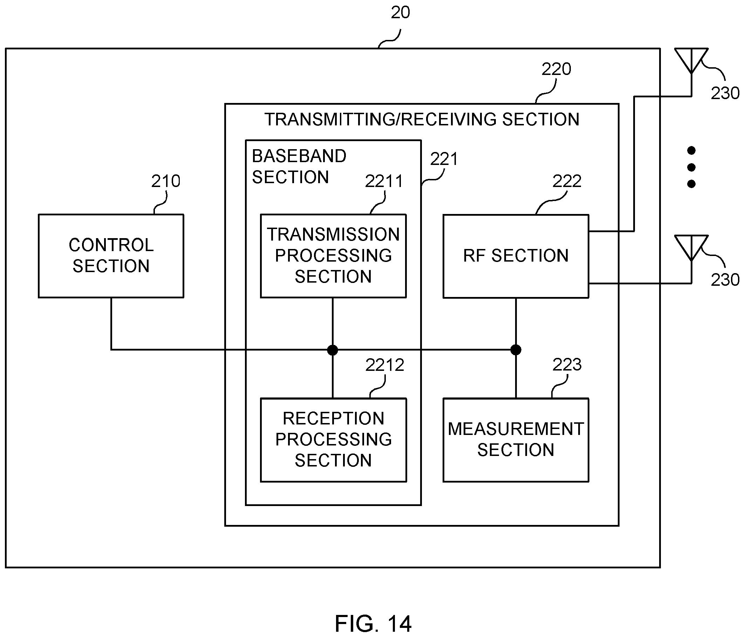

Fig. 14 is a diagram illustrating an example of a configuration of a user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

It is noted that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

It is noted that the transmitting section and the receiving section of the user terminal 20 in the present disclosure may include at least one of the transmitting/receiving section 220 and the transmitting/receiving antenna 230.

It is noted that the transmitting/receiving section 220 may receive a radio resource control (RRC) parameter (for example, TCI-state-r17, which is an RRC information element for a TCI state) for a TCI state that can be used as both a transmission configuration indication state (TCI state) for downlink (DL) (DL TCI state) and a TCI state for uplink (UL) (UL TCI state).

The control section 210 may determine that the RRC parameter can be used for at least one of the TCI state for the DL and the TCI state for the UL based on which set of TCI states the RRC parameter is associated with. The "set" herein may correspond to at least one of tci-StatesToAddModList (Unified-TCI-State-Config), UL-tci-StatesToAddModList (UL-TCI-State-Config), DL-tci-StatesToAddModList (DL-TCI-State-Config), and the like described above.

In a case where the RRC parameter is associated with a common first set (for example, tci-StatesToAddModList) for both the DL and the UL, the control section 210 may determine that the RRC parameter can be used for both the TCI state for the DL and the TCI state for the UL.

In a case where the RRC parameter is associated with the first set and the RRC parameter is associated with a second set (for example, UL-tci-StatesToAddModList) for one of the DL and the UL (for example, UL), the control section 210 may determine that the RRC parameter is available only for the TCI state for one of the DL and the UL.

In a case where the RRC parameter is associated with the first set and the second set, and further, the RRC parameter is associated with a third set (for example, DL-tci-StatesToAddModList) for the other of the DL and the UL, the control section 210 may determine that the RRC parameter can be used for both the TCI state for the DL and the TCI state for the UL.

### (Hardware Configuration)

It is noted that the block diagrams that have been used to describe the above embodiments illustrate blocks in functional units. These functional blocks (components) may be implemented in any combinations of at least one of hardware and software. In addition, the method of implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the function includes, but is not limited to, determining, deciding, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

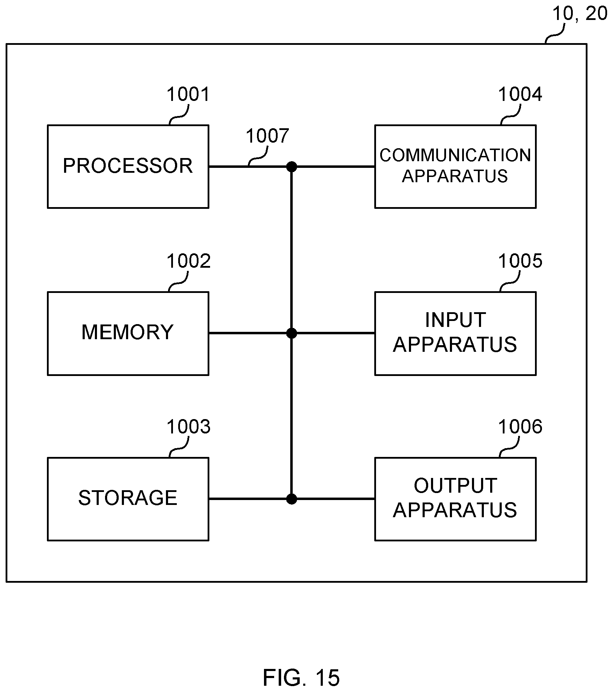

For example, the base station, the user terminal, and the like according to one embodiment of the present disclosure may function as a computer configured to execute the processing of the radio communication method of the present disclosure. Fig. 15 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

It is noted that, in the present disclosure, the terms such as an apparatus, a circuit, a device, a section, or a unit can be replaced with each other. The hardware configuration of the base station 10 and the user terminal 20 may be configured to include one or more of the apparatuses illustrated in the drawings, or may be configured not to include some apparatuses.

For example, although only one processor 1001 is shown, a plurality of processors may be provided. In addition, the processing may be executed by one processor, or the processing may be executed by two or more processors simultaneously or sequentially, or using other methods. It is noted that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading and writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110(210), transmitting/receiving section 120(220), and the like may be implemented by the processor 1001.

In addition, the processor 1001 reads programs (program codes), software modules, data, and the like from at least one of the storage 1003 and the communication apparatus 1004 into the memory 1002, and performs various types of processing according to these. As the program, a program that causes a computer to execute at least a part of the operation described in the above-described embodiment is used. For example, the control section 110(210) may be implemented by control programs stored in the memory 1002 and configured to operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, and other appropriate storage media. The storage 1003 may be referred to as secondary storage apparatus.

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120(220), the transmitting/receiving antenna 130(230), and the like described above may be implemented by the communication apparatus 1004. The transmitting/receiving section 120(220) may be implemented by being physically or logically separated into the transmitting section 120a(220a) and the receiving section 120b(220b).

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). It is noted that the input apparatus 1005 and the output apparatus 1006 may be provided in an integrated structure (for example, a touch panel).

Furthermore, these pieces of apparatus, including the processor 1001, the memory 1002 and so on are connected to each other by the bus 1007 so as to communicate information. The bus 1007 may be formed with a single bus, or may be formed with buses that vary between pieces of apparatus.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

It is noted that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. The reference signal can be abbreviated to an RS, and may be referred to as a pilot, a pilot signal, and the like, depending on which standard applies. In addition, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter applied to at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Further, a slot may be a time unit based on numerology.

The slot may include a plurality of mini slots. Each mini slot may include one or more symbols in the time domain. In addition, the mini slot may be referred to as a subslot. Each mini slot may include fewer symbols than the slot. A PDSCH (or PUSCH) transmitted in a time unit larger than the mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a minislot and a symbol all represent the time unit in signal communication. The radio frame, the subframe, the slot, the mini slot, and the symbol may be called by other applicable names, respectively. It is noted that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. It is noted that the unit to represent the TTI may be referred to as a "slot", a "mini slot" and so on, instead of a "subframe".

Here, a TTI refers to, for example, the minimum time unit of scheduling in radio communication. For example, in the LTE system, a base station performs scheduling to allocate radio resources (a frequency bandwidth, transmission power, and the like that can be used in each user terminal) to each user terminal in TTI units. It is noted that the definition of TTIs is not limited to this.

The TTI may be a transmission time unit of a channel-coded data packet (transport block), a code block, a codeword, and the like or may be a processing unit of scheduling, link adaptation, and the like. It is noted that when the TTI is given, a time interval (for example, the number of symbols) to which a transport block, a code block, a codeword, or the like is actually mapped may be shorter than the TTI.

It is noted that, when one slot or one minislot is referred to as a "TTI", one or more TTIs (that is, one or multiple slots or one or more minislots) may be the minimum time unit of scheduling. Further, the number of slots (the number of minislots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

It is noted that a long TTI (for example, a usual TTI, a subframe, and the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and, for example, may be twelve. The number of subcarriers included in the RB may be determined based on a numerology.

Additionally, the RB may include one or more symbols in the time domain, and may be one slot, one minislot, one subframe or one TTI in length. One TTI, one subframe, and the like may each be formed of one or more resource blocks.

It is noted that one or more RBs may be referred to as a physical resource block (physical RB (PRB)), a subcarrier group (SCG), a resource element group (REG), a PRB pair, an RB pair, and the like.

In addition, the resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within the BWP.

The BWP may include a UL BWP (BWP for UL) and DL BWP (BWP for DL). For the UE, one or more BWPs may be configured within one carrier.

At least one of the configured BWPs may be active, and the UE may not assume to transmit or receive a given channel/signal outside the active BWP. It is noted that "cell", "carrier", and the like in the present disclosure may be replaced with "BWP".

It is noted that the structures of radio frames, subframes, slots, minislots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, and the like described in the present disclosure may be represented using absolute values, or may be represented using relative values with respect to given values, or may be represented using other corresponding information. For example, a radio resource may be indicated by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, and the like can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a management table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

It is noted that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

Additionally, reporting of given information (for example, reporting of information to the effect that "X holds") does not necessarily have to be sent explicitly, and can be sent implicitly (for example, by not reporting this piece of given information, by reporting another piece of information, and so on).
judgments may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Furthermore, software, commands, information and so on may be transmitted and received via transmission media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station and the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be referred to as a transmitting apparatus, a receiving apparatus, a radio communication apparatus, and the like. It is noted that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. It is noted that at least one of the base station and the mobile station also includes an apparatus that does not necessarily move during a communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be interpreted as a term corresponding to communication between terminals (for example, "side"). For example, an uplink channel, a downlink channel, and the like may be replaced with a side channel.

Similarly, the user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. in addition, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, "judging (deciding)" as used herein may be interpreted to mean making judgements (decisions) related to receiving (for example, receiving information), transmitting (for example, transmitting information), inputting, outputting, accessing (for example, accessing data in a memory) and so on.

In addition, "judging (deciding)" as used herein may be interpreted to mean making judgements (decisions) related to resolving, selecting, choosing, establishing, comparing and so on. In other words, to "judging (deciding)" as used herein may be interpreted to mean making judgements (decisions) related to some action.

In addition, "judging (deciding)" may be replaced with "assuming", "expecting", "considering", or the like.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". It is noted that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as a, an, and the in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

## Claims

1. A terminal comprising:
a receiving section that receives a radio resource control (RRC) parameter for a TCI state available as both a transmission configuration indication state (TCI state) for downlink (DL) and a TCI state for uplink (UL); and
a control section that determines, based on which set of the TCI states the RRC parameter is associated with, that the RRC parameter is available for at least one of the TCI state for the DL and the TCI state for the UL.

2. The terminal according to claim 1, wherein the control section determines, when the RRC parameter is associated with a common first set for both the DL and the UL, that the RRC parameter is available for both the TCI state for the DL and the TCI state for the UL.

3. The terminal according to claim 1 or 2, wherein the control section determines, when the RRC parameter is associated with the first set and the RRC parameter is associated with a second set for one of the DL and the UL, that the RRC parameter is available only for the TCI state for one of the DL and the UL.

4. The terminal according to any one of claims 1 to 3, wherein the control section determines, when the RRC parameter is associated with the first set and the second set, and further, when the RRC parameter is associated with a third set for the other of the DL and the UL, that the RRC parameter is available for both the TCI state for the DL and the TCI state for the UL.

5. A radio communication method of a terminal, the radio communication method comprising:
receiving a radio resource control (RRC) parameter for a TCI state available as both a transmission configuration indication state (TCI state) for downlink (DL) and a TCI state for uplink (UL); and
determining, based on which set of the TCI states the RRC parameter is associated with, that the RRC parameter is available for at least one of the TCI state for the DL and the TCI state for the UL.

6. A base station comprising:
a transmitting section that transmits, to a terminal, a radio resource control (RRC) parameter for a TCI state available as both a transmission configuration indication state (TCI state) for downlink (DL) and a TCI state for uplink (UL); and
a control section that assumes that the terminal determines that the RRC parameter is available for at least one of the TCI state for the DL and the TCI state for the UL based on which set of the TCI states the RRC parameter is associated with.
